# EUROPÄISCHE PATENTSCHRIFT

(11) **EP 2 416 927 B1**
(45) Veröffentlichungstag und Bekanntmachung des Hinweises auf die Patenterteilung: **10.06.2015**
(21) Anmeldenummer: 10720251.7
(22) Anmeldetag: 07.04.2010
(51) Int. Cl.: B25B 23/06, B21J 15/32, B23P 19/00, B23Q 3/157

(54) **VERFAHREN ZUM AUTOMATISCHEN VERBINDEN ZWEIER WERKSTÜCKE**
METHOD FOR AUTOMATICALLY CONNECTING TWO WORKPIECES
PROCÉDÉ D'ASSEMBLAGE AUTOMATIQUE DE DEUX PIÈCES

(30) Priorität: 07.04.2009 DE 102009016372
(43) Veröffentlichungstag der Anmeldung: 15.02.2012
(73) Patentinhaber: Dürr Assembly Products GmbH, 66346 Püttlingen (DE)
(72) Erfinder: HERRMANN, Armin, 66292 Riegelsberg (DE); BERRY, Brian, 66123 Saarbrücken (DE); BRACH, Christian, 57200 Wiesviller (FR); AREND, Sacha, 57550 Dalem (FR)
(74) Vertreter: Vièl, Christof
(86) Internationale Anmeldenummer: PCT/DE2010/000395
(87) Internationale Veröffentlichungsnummer: WO 2010/115411

(56) Entgegenhaltungen:
- WO-A1-2007/031701
- WO-A2-2010/043362
- DE-A1-102006 036 981
- US-A1- 2008 061 103

## Beschreibung

Die Erfindung betrifft ein Verfahren zum automatischen Verbinden zweier Werkstücke mittels Verbindungselementen, wobei die Verbindungselemente Schrauben, Bolzen oder Muttern sind.

Derartige Verfahren werden bei der Fahrzeugproduktion beispielsweise im Bereich der "Hochzeit", dem Bereich, in dem die Karosserie mit dem Chassis durch Verschrauben verbunden wird, eingesetzt. Die Erfindung wird nachfolgend an diesem Anwendungsbeispiel erläutert, ohne jedoch hierauf beschränkt zu sein. Sie kann vielmehr Anwendung in allen Bereichen finden, in denen ein automatisches Verbinden zweier Werkstücke mittels Verbindungselementen erfolgt.

Es ist bekannt, Schrauben mittels Verlängerungsspindeln in einer Schraubstation einzuschrauben. Vorher werden die Schrauben in der Aufrüstung in die Verlängerungsspindeln durch Werker eingelegt. Diese Vorgehensweise erfordert jedoch für jede Schraubstelle eine Verlängeringsspindel auf der Palette, was hohe Kosten für die Palette mit sich bringt. Die Gesamtmenge der Verlängerungsspindeln steigt mit der Anzahl der Paletten im Hochzeitsystem, was wiederum die Kosten des Gesamtsystems in die Höhe treibt. Bei einem Mischbetrieb, bei dem verschiedene Schrauben verwendet werden, erhöht sich die Komplexität der Paletten, wobei eine Steigerung der Komplexität der Paletten wiederum ein Palettenwechselsystem mit Fördertechnik und einem Palettenspeicher erforderlich machen kann. Auch eine Fahrzeugtyperweiterung erfordert neue Paletten, was mit Kosten und Zeitaufwand verbunden ist.

Gemäß einem anderen Stand der Technik werden die Schrauben in der Aufrüstung durch Werker in ein ortsfestes "Palettennest" mit Grewindelöchern eingedreht. In der Schraubstation werden die Schrauben dann nacheinander mittels eines Roboterwerkzeugs herausgedreht und in die Karosserie eingeschraubt. Auch hier muß ein Werker in der Aufrüstung die Schrauben in das Palettennest eindrehen, was eine repetitive Tätigkeit ist, die zudem mit relativ hohem Zeitaufwand verbunden ist. Außerdem muß das Roboterwerkzeug die Schrauben wieder aus dem Palettennest herausdrehen, was eine gewisse Taktzeit in Anspruch nimmt.

Aus der DE 10 2006 036 981 A1 sind ein Verfahren und eine Vorrichtung zum Befestigen eines Befestigungselementes an einem Werkstück bekannt, wobei ein Vormagazin einer Fördereinrichtung mit Befestigungselementen aus einem Vorratsbehälter bestückt wird und die Befestigungselemente aus dem Vormagazin in ein Magazin einer Konsole mittels einer Übertragungseinrichtung übertragen werden.

Die WO 2010/043362 A2 beschreibt ein Setzgerät mit einem Magazin und einem Bereitstellungsmodul für Fügeelemente, wobei ein Vorschubmechanismus vorgesehen ist, mit dem die Fügeelemente innerhalb einer Speichernut zu dem Kopfstück des Setzgerätes bewegbar sind.

Aufgabe der Erfindung ist es, ein Verfahren zum automatischen Verbinden zweier Werkstücke mittels Verbindungselementen, wobei die Verbindungselemente Schrauben, Bolzen oder Muttern sind, dahingehend zu verbessern, daß das Zuführen der Verbindungselemente weniger personal- und zeitintensiv ist.

Diese Aufgabe wird erfindungsgemäß durch folgende Verfahrensschritte gelöst:
▪ Einlegen der Verbindungselemente in ein Verbindungselementennest, wobei das Verbindungselementennest Öffnungen zum Einlegen der Verbindungselemente aufweist und die Öffnungen zur Unterseite hin ver- und entriegelbar sind,
• Koppeln des Verbindungselementennestes mit einem drehbaren Magazin mit der gleichen Anzahl von Öffnungen zur Aufnahme der Verbindungselemente, unterhalb dessen eine Schraubspindel eines Schraubers angeordnet ist, welche jeweils fluchtend mit einer Öffnung des Magazins angeordnet werden kann,
• Entriegeln der Öffnungen des Verbindungselemenennestes, wodurch die Verbindungselemente in das Magazin übertragen werden,
• Spannen und Positionieren der Verbindungselemente in dem Magazin,
• Zuführen der Verbindungselemente zu dem Schrauber, der die entsprechende Schraubverbindung durchführt.

Dieses Verfahren ermöglicht es, daß die Verbindungselemente lediglich in die Öffnungen des Verbindungselementenestes eingelegt werden müssen und dann durch Entriegeln der Öffnungen in das Magazin übertragen werden. Die Erfindung bringt gegenüber dem Stand der Technik eine Vielzahl von Vorteilen mit sich, insbesondere die folgenden:
- Die Taktzeit wird gegenüber dem Ein- und Ausschrauben der Verbindungselemente verkürzt, da alle Verbindungselemente in einem Ablauf übernommen werden können,
- Das Vereinzeln der Verbindungselemente erfolgt parallel zum Anfahren der jeweiligen Schraubposition, was ebenfalls eine Verkürzung der Tatzeit mit sich bringt,
- Die Komplexität der Paletten wird reduziert und die Verlängerungsspindeln auf den Paletten können entfallen, was sowohl in wirtschaftlicher Hinsicht als auch bezüglich der Flexibilität von Vorteil ist,
- Das Verbindungselementenest kann auf der Palette oder an der Schraubstation angeordnet sein, was in Hinblick auf die Flexibilität und in wirtschaftlicher Hinsicht vorteilhaft ist, und
- Die Vorrichtung kann für ein Verbinden zweier beliebig im Raum angeordneter Werkstücke verwendet werden.

Eine bevorzugte Ausbildung der Erfindung besteht darin, daß das Koppeln des Verbindungselementennestes mit dem Magazin über einen Bolzen am Magazin erfolgt, dem eine zentrale Öffnung des Verbindungselementnestes zugeordnet ist.

Alternativ kann auch vorgesehen sein, daß das Koppeln des Verbindungselementennestes mit dem Magazin über einen Bolzen am Verbindungselementnest erfolgt, dem eine zentrale Öffnung des Magazins zugeordnet ist.

Es liegt im Rahmen der Erfindung, daß das Bestücken des Verbindungselementnestes automatisch erfolgt. Das Bestücken kann nicht nur manuell, sondern auch automatisch erfolgen, was sowohl in Hinblick auf die Flexibilität als auch in Hinblick auf die Stückkosten von Vorteil sein kann.

Nachfolgend wird ein Ausführungsbeispiel der Erfindung anhand von Zeichnungen beschrieben. Es zeigen
- Fig. 1a und Fig. 1b: eine erfindungsgemäße Vorrichtung in Gesamt- und in Detailansicht,
- Fig. 2a, Fig. 2b und Fig. 2c: das automatische Verschrauben mit einer erfindungsgemäßen Vorrichtung.

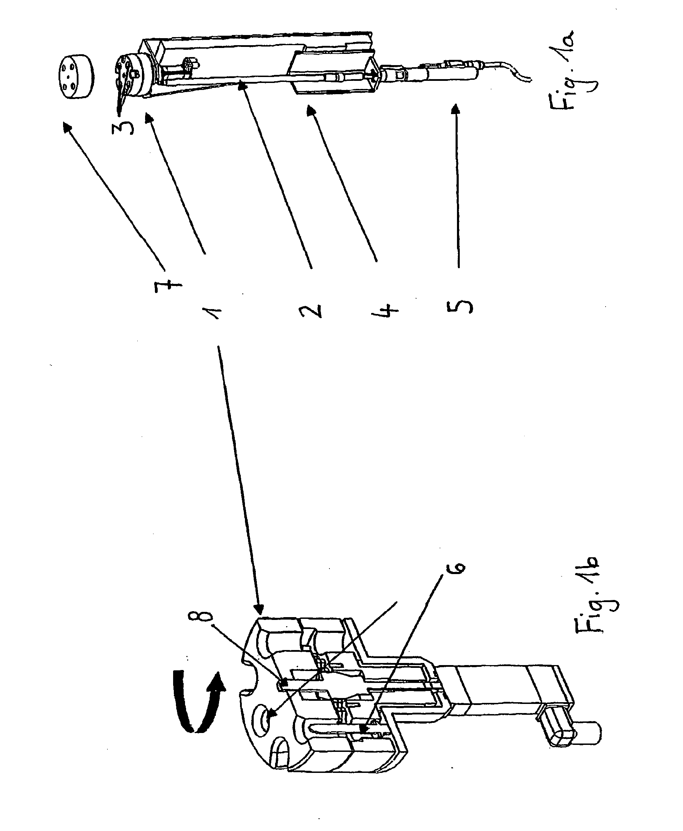

Wie aus Fig. 1a ersichtlich, weist eine erfindungsgemäße Vorrichtung ein drehbares Magazin 1 für Verbindungselemente auf, unterhalb dessen eine Schraubspindel 2 angeordnet ist, welche jeweils fluchtend mit einer Öffnung 3 des Magazins 1 angeordnet werden kann. Weiterhin sind eine Hubeinheit 4 und der Schrauber 5 dargestellt. Das Magazin 1 weist im vorliegenden Beispiel vier Öffnungen 3 auf, in welches Verbindungselemente 6 (hier: Schrauben) aufgenommen, gespannt und positioniert werden können.

Weiterhin ist ein Verbindungselementenest 7 zu erkennen, das mit dem Magazin 1 koppelbar ist. Die Kopplung des Verbindungselementenestes 7 mit dem Magazin 1 erfolgt im vorliegenden Beispiel über einen Bolzen 8 des Magazins 1, der in eine zentrale Öffnung 9 des Verbindungselementenestes 7 eingreift. Das Verbindungselementenest 7 weist vorzugsweise eine identische Zahl von Öffnungen 10 auf wie das Magazin 1.

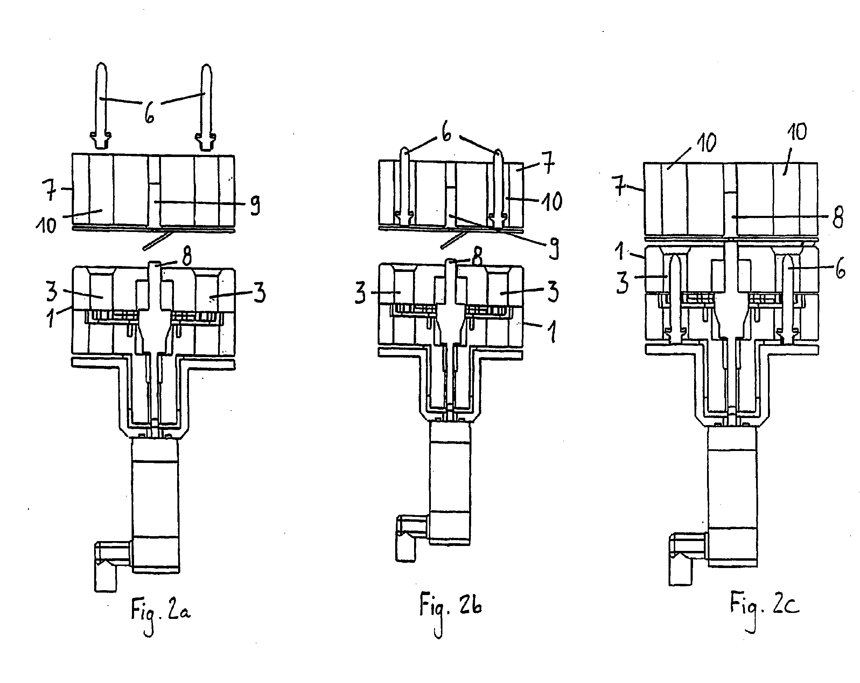

In den Fig. 2a bis 2c sind die einzelnen Arbeitsschritte dargestellt. Wie aus den Fig. 2a und 2b ersichtlich, werden die Verbindungselemente 6, hier die Schrauben, manuell oder automatisch in die Öffnungen 10 des Verbindungselementenestes 7 eingelegt. Die Öffnungen 10 sind zunächst zur Unterseite des Verbindungselementenestes 7 hin verriegelt.

Gemäß Fig. 2c werden die Öffnungen des Verbindungselementenestes 7 dann zur Unterseite des Verbindungselementenestes 7 hin entriegelt, wobei die Verbindungselemente 6 in das Magazin 1 gleiten und dort gespannt und positioniert werden. Während der Anfahrt der jeweiligen Schraubposition werden die Verbindungselemente 7 vereinzelt und dem Schrauber 5 zugeführt, der die entsprechende Schraubverbindung dann durchführt.

## Patentansprüche

1. Verfahren zum automatischen Verbinden zweier Werkstücke mittels Verbindungselementen, wobei die Verbindungselemente Schrauben, Bolzen oder Muttern sind, mit folgenden Verfahrensschritten:
• Einlegen der Verbindungselemente (6) in ein Verbindungselementennest (7), wobei das Verbindungselementennest (7) Öffnungen (10) zum Einlegen der Verbindungselemente (6) aufweist und die Öffnungen (10) zur Unterseite hin ver- und entriegelbar sind,
• Koppeln des Verbindungselementennestes (7) mit einem drehbaren Magazin (1) mit der gleichen Anzahl von Öffnungen (3) zur Aufnahme der Verbindungselemente (6), unterhalb dessen eine Schraubspindel (2) eines Schraubers (5) angeordnet ist, welche jeweils fluchtend mit einer Öffnung (3) des Magazins (1) angeordnet werden kann,
• Entriegeln der Öffnungen (10) des Verbindungselemenennestes (7), wodurch die Verbindungselemente (6) in das Magazin (1) übertragen werden,
• Spannen und Positionieren der Verbindungselemente (6) in dem Magazin (1),
• Zuführten der Verbindungselemente (6) zu dem Schrauber (5), der die entsprechende Schraubverbindung durchführt.

2. Verfahren gemäß Anspruch 1, **dadurch gekennzeichnet, daß** das Koppeln des Verbindungselementennestes (7) mit dem Magazin (1) über einen Bolzen (8) am Magazin (1) erfolgt, dem eine zentrale Öffnung (9) des Verbindungselementnestes (7) zugeordnet ist.

3. Verfahren gemäß Anspruch 1, **dadurch gekennzeichnet, daß** das Koppeln des Verbindungselementennestes (7) mit dem Magazin (1) über einen Bolzen (8) am Verbindungselementnest (7) erfolgt, dem eine zentrale Öffnung (9) des Magazins (1) zugeordnet ist.

4. Verfahren gemäß Anspruch 1, **dadurch gekennzeichnet, daß** das Bestücken des Verbindungselementnestes (7) automatisch erfolgt.

## Claims

1. Method for automatically connecting two workpieces by means of fasteners, said fasteners being screws, bolts, pins or nuts, comprising the following steps:
• Inserting the fasteners (6) into a fastener nest (7), the fastener nest (7) having, for insertion of the fasteners (6), openings (10) that can be blocked and unblocked at their lower ends,
• Coupling the fastener nest (7) to a rotatable magazine (1), which has the same number of openings (3) for receiving the fasteners (6) and beneath which a screw spindle (2) is positioned that can be aligned at any one time with an opening (3) in the magazine (1),
• Unblocking the openings (10) in the fastener nest (7) and thereby transferring the fasteners (6) to the magazine (1),
• Clamping and positioning the fasteners (6) in the magazine (1),
• Supplying the fasteners (6) to the bolting tool (5), which executes the bolted connection.

2. Device according to claim 1, **characterised in that** coupling of the fastener nest (7) to the magazine (1) is effected by way of a pin (8) in the magazine (1), a central opening (9) in the fastener nest (7) being assigned to said pin (8).

3. Device according to claim 1, **characterised in that** coupling of the fastener nest (7) to the magazine (1) is effected by way of a pin (8) in the fastener nest (7), a central opening (9) in the magazine (1) being assigned to said pin (8).

4. Device according to claim 1, **characterised in that** the fastener nest (7) is supplied automatically with fasteners.

## Revendications

1. Procédé pour assembler automatiquement deux pièces au moins d'éléments d'assemblage, les éléments d'assemblage étant des vis, des boulons ou des écrous, avec les étapes de procédé suivantes :
- mise en place des éléments d'assemblage (6) dans un réceptacle pour éléments d'assemblage (7), le réceptacle pour éléments d'assemblage (**7**) présentant des ouvertures (10) pour la mise en place des éléments d'assemblage (6) et les ouvertures (10) pouvant être verrouillées et déverrouillées en direction de la face inférieure,
- accouplement du réceptacle pour éléments d'assemblage (7) avec un magasin (1) pouvant pivoter, lequel magasin présente le même nombre d'ouvertures (3) pour recevoir les éléments d'assemblage (6) et en dessous duquel est disposé un arbre de vissage (2) d'une visseuse (5) lequel peut être aligné avec chacune des ouvertures (3) du magasin (1),
- déverrouillage des ouvertures (10) du réceptacle pour éléments d'assemblage (7) de sorte que les éléments d'assemblage (6) sont transmis dans le magasin (1),
- serrage et positionnement des éléments d'assemblage (6) dans le magasin (1),
- déplacement des éléments d'assemblage (6) dans la visseuse (5) qui exécute la liaison par vissage correspondante.

2. Procédé selon la revendication 1, **caractérisé en ce que** l'accouplement du réceptacle pour éléments d'assemblage (7) avec le magasin (1) est réalisé au moyen d'un boulon (8) sur le magasin (1) auquel est associé une ouverture centrale (9) du réceptacle pour éléments d'assemblage (7).

3. Procédé selon la revendication 1, **caractérisé en ce que** l'accouplement du réceptacle pour éléments d'assemblage (7) avec le magasin (1) est réalisé au moyen d'un boulon (8) sur le réceptacle pour éléments d'assemblage (7) auquel est associé une ouverture centrale (9) du magasin (1).

4. Procédé selon la revendication 1, **caractérisé en ce que** le remplissage du réceptacle pour éléments d'assemblage (7) est réalisé automatiquement.
